# EUROPEAN PATENT APPLICATION

(11) **EP 3 989 635 A1**
(43) Date of publication of application: **27.04.2022**
(21) Application number: 20203050.8
(22) Date of filing: 21.10.2020
(51) Int. Cl.: H04W 24/10

(54) **CHANNEL STATE INFORMATION REPORTING**

(71) Applicant: Nokia Technologies Oy, 02610 Espoo (FI)
(72) Inventor: HAJRI, Salah, 92160 Antony (FR); LADDU JAYASINGHE, Keeth, 02140 Espoo (FI); AHMED SALEM, Rana, 80869 Munich (DE); POCOVI, Guillermo, 9000 Aalborg (DK); LI, Zexian, 02610 Espoo (FI); DEGHEL, Matha, 75014 Paris (FR)
(74) Representative: Nokia EPO representatives

(57) **Abstract**

An apparatus comprising means for performing:
receiving a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
determining at least one channel state quantity using, at least, a plurality of interference measurements taken at a plurality of different times, wherein the plurality of interference measurements are enabled, at least in part, by information in the channel state reporting configuration; and
transmitting the determined at least one channel state quantity.

## Description

### TECHNOLOGICAL FIELD

Embodiments of the present disclosure relate to channel information reporting. Some relate to channel information reporting in channel state information reporting.

### BACKGROUND

A wireless network comprises a plurality of network nodes including terminal nodes and access nodes. Communication between the terminal nodes and access nodes, also between terminal nodes and terminal nodes, is wireless.

In some circumstances, it may be desirable to modify and/or enhance reporting of information of a channel.

### BRIEF SUMMARY

According to various, but not necessarily all, embodiments there is provided examples as claimed in the appended claims.

According to various, but not necessarily all, embodiments there is provided an apparatus comprising means for performing:
receiving a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
determining at least one channel state quantity using, at least, a plurality of interference measurements taken at a plurality of different times, wherein the plurality of interference measurements are enabled, at least in part, by information in the channel state reporting configuration; and
transmitting the determined at least one channel state quantity.

In examples, the channel state reporting configuration comprises information to enable at least one of:
determination of the radio resources to be used for the plurality of interference measurements;
determination of a number of interference measurements to be made;
determination of a time interval for over which interference measurements are to be made;
determination of the one or more channel state quantities to be determined;
determination of at least one reporting time offset; and
determination of at least one radio resource to be used for transmitting the determined at least one channel state quantity.

In examples, the means are configured to perform:
receiving at least one message; and
transmitting the at least one determined channel state quantity, in response to receiving the at least one message.

In examples, the at least one message comprises information to enable at least one of:
determination of one or more radio resources to be used for transmitting the determined at least one channel state quantity; and
determination of one or more reporting time offsets.

In examples, the at least one message comprises at least one of:
one or more reporting time offsets; and
one or more timing indicators, relative to which one or more reporting time offsets can be determined.

In examples, transmitting the determined at least one channel state quantity comprises transmitting the determined at least one channel state quantity on a physical uplink control channel, PUCCH, or physical uplink shared channel, PUSCH.

In examples, transmitting the determined at least one channel state quantity comprises transmitting at least a first channel state quantity at a first time and transmitting at least a second channel state quantity at a second, different time and wherein at least one of the at least first and second channel state quantities comprises the at least one channel state quantity determined using, at least, a plurality of interference measurements taken at a plurality of times.

In examples, the means comprises
at least one processor; and
at least one memory including computer program code, the at least one memory and computer program code configured to, with the at least one processor, cause the performance of the apparatus.

According to various, but not necessarily all, embodiments there is provided a method comprising:
receiving a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
determining at least one channel state quantity using, at least, a plurality of interference measurements taken at a plurality of different times, wherein the plurality of interference measurements are enabled, at least in part, by information in the channel state reporting configuration; and
transmitting the determined at least one channel state quantity.

In examples, the channel state reporting configuration comprises information to enable at least one of:
determination of the radio resources to be used for the plurality of interference measurements;
determination of a number of interference measurements to be made;
determination of a time interval for over which interference measurements are to be made;
determination of the one or more channel state quantities to be determined;
determination of at least one reporting time offset; and
determination of at least one radio resource to be used for transmitting the determined at least one channel state quantity.

In examples, the method comprises:
receiving at least one message; and
transmitting the at least one determined channel state quantity, in response to receiving the at least one message.

In examples, the at least one message comprises information to enable at least one of:
determination of one or more radio resources to be used for transmitting the determined at least one channel state quantity; and
determination of one or more reporting time offsets.

In examples, the at least one message comprises at least one of:
one or more reporting time offsets; and
one or more timing indicators, relative to which one or more reporting time offsets can be determined.

In examples, transmitting the determined at least one channel state quantity comprises transmitting the determined at least one channel state quantity on a physical uplink control channel, PUCCH, or physical uplink shared channel, PUSCH.

In examples, transmitting the determined at least one channel state quantity comprises transmitting at least a first channel state quantity at a first time and transmitting at least a second channel state quantity at a second, different time and wherein at least one of the at least first and second channel state quantities comprises the at least one channel state quantity determined using, at least, a plurality of interference measurements taken at a plurality of times.

According to various, but not necessarily all, embodiments there is provided a computer program comprising instructions for causing an apparatus to perform at least:
receiving a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
determining at least one channel state quantity using, at least, a plurality of interference measurements taken at a plurality of different times, wherein the plurality of interference measurements are enabled, at least in part, by information in the channel state reporting configuration; and
transmitting the determined at least one channel state quantity.

In examples, the channel state reporting configuration comprises information to enable at least one of:
determination of the radio resources to be used for the plurality of interference measurements;
determination of a number of interference measurements to be made;
determination of a time interval for over which interference measurements are to be made;
determination of the one or more channel state quantities to be determined;
determination of at least one reporting time offset; and
determination of at least one radio resource to be used for transmitting the determined at least one channel state quantity.

In examples, the computer program comprises instructions for causing an apparatus to perform at least:
receiving at least one message; and
transmitting the at least one determined channel state quantity, in response to receiving the at least one message.

In examples, the at least one message comprises information to enable at least one of:
determination of one or more radio resources to be used for transmitting the determined at least one channel state quantity; and
determination of one or more reporting time offsets.

In examples, the at least one message comprises at least one of:
one or more reporting time offsets; and
one or more timing indicators, relative to which one or more reporting time offsets can be determined.

In examples, transmitting the determined at least one channel state quantity comprises transmitting the determined at least one channel state quantity on a physical uplink control channel, PUCCH, or physical uplink shared channel, PUSCH.

In examples, transmitting the determined at least one channel state quantity comprises transmitting at least a first channel state quantity at a first time and transmitting at least a second channel state quantity at a second, different time and wherein at least one of the at least first and second channel state quantities comprises the at least one channel state quantity determined using, at least, a plurality of interference measurements taken at a plurality of times.

According to various, but not necessarily all, embodiments there is provided an apparatus comprising means for performing:
determining a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
transmitting the determined channel state reporting configuration; and
receiving at least one channel state quantity determined using, at least, a plurality of interference measurements enabled by information in the channel state reporting configuration.

In examples, the channel state reporting configuration comprises information to enable at least one of:
determination of the radio resources to be used for the plurality of interference measurements;
determination of the one or more channel state quantities to be determined;
determination of a number of interference measurements to be made;
determination of a time interval for over which interference measurements are to be made;
determination of at least one reporting time offset; and
determination of at least one radio resource to be used for transmitting the determined at least one channel state quantity.

In examples, the means are configured to perform:
transmitting at least one message to cause transmission of at least the at least one channel state quantity determined using, at least, a plurality of interference measurements.

In examples, the at least one message comprises information to enable at least one of:
determination of one or more radio resources to be used for transmitting the determined at least one channel state quantity; and
determination of one or more reporting time offsets.

In examples, the at least one message comprises at least one of:
one or more reporting time offsets; and
one or more timing indicators, relative to which one or more reporting time offsets can be determined.

In examples, receiving the at least one channel state quantity comprises receiving the at least one channel state quantity on a physical uplink control channel, PUCCH, or physical uplink shared channel, PUSCH

In examples, receiving the at least one channel state quantity comprises receiving at least a first channel state quantity at a first time and receiving at least a second channel state quantity at a second, different time and wherein at least one of the at least first and second channel state quantities comprises the at least one channel state quantity determined using, at least, a plurality of interference measurements taken at a plurality of times.

In examples, the means comprises
at least one processor; and
at least one memory including computer program code, the at least one memory and computer program code configured to, with the at least one processor, cause the performance of the apparatus.

According to various, but not necessarily all, embodiments there is provided a method comprising:
determining a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
transmitting the determined channel state reporting configuration; and
receiving at least one channel state quantity determined using, at least, a plurality of interference measurements enabled by information in the channel state reporting configuration.

In examples, the channel state reporting configuration comprises information to enable at least one of:
determination of the radio resources to be used for the plurality of interference measurements;
determination of the one or more channel state quantities to be determined;
determination of a number of interference measurements to be made;
determination of a time interval for over which interference measurements are to be made;
determination of at least one reporting time offset; and
determination of at least one radio resource to be used for transmitting the determined at least one channel state quantity.

In examples, the method comprises:
transmitting at least one message to cause transmission of at least the at least one channel state quantity determined using, at least, a plurality of interference measurements.

In examples, the at least one message comprises information to enable at least one of:
determination of one or more radio resources to be used for transmitting the determined at least one channel state quantity; and
determination of one or more reporting time offsets.

In examples, the at least one message comprises at least one of:
one or more reporting time offsets; and
one or more timing indicators, relative to which one or more reporting time offsets can be determined.

In examples, receiving the at least one channel state quantity comprises receiving the at least one channel state quantity on a physical uplink control channel, PUCCH, or physical uplink shared channel, PUSCH

In examples, receiving the at least one channel state quantity comprises receiving at least a first channel state quantity at a first time and receiving at least a second channel state quantity at a second, different time and wherein at least one of the at least first and second channel state quantities comprises the at least one channel state quantity determined using, at least, a plurality of interference measurements taken at a plurality of times.

According to various, but not necessarily all, embodiments there is provided a computer program comprising instructions for causing an apparatus to perform at least:
determining a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
transmitting the determined channel state reporting configuration; and
receiving at least one channel state quantity determined using, a least, a plurality of interference measurements enabled by information in the channel state reporting configuration.

In examples, the channel state reporting configuration comprises information to enable at least one of:
determination of the radio resources to be used for the plurality of interference measurements;
determination of the one or more channel state quantities to be determined;
determination of a number of interference measurements to be made;
determination of a time interval for over which interference measurements are to be made;
determination of at least one reporting time offset; and
determination of at least one radio resource to be used for transmitting the determined at least one channel state quantity.

In examples, the computer program comprises instructions for causing an apparatus to perform at least:
transmitting at least one message to cause transmission of at least the at least one channel state quantity determined using, at least, a plurality of interference measurements.

In examples, the at least one message comprises information to enable at least one of:
determination of one or more radio resources to be used for transmitting the determined at least one channel state quantity; and
determination of one or more reporting time offsets.

In examples, the at least one message comprises at least one of:
one or more reporting time offsets; and
one or more timing indicators, relative to which one or more reporting time offsets can be determined.

In examples, receiving the at least one channel state quantity comprises receiving the at least one channel state quantity on a physical uplink control channel, PUCCH, or physical uplink shared channel, PUSCH

In examples, receiving the at least one channel state quantity comprises receiving at least a first channel state quantity at a first time and receiving at least a second channel state quantity at a second, different time and wherein at least one of the at least first and second channel state quantities comprises the at least one channel state quantity determined using, at least, a plurality of interference measurements taken at a plurality of times.

According to various, but not necessarily all, embodiments there is provided an apparatus comprising means for:
determining a separate indication to cause transmission of at least one channel state quantity 14 determined using, at least, a plurality of interference measurements 12, wherein the separate indication comprises information to indicate at least one of:
Identifier of at least one channel state reporting configuration comprising information to enable determination of one or more channel state quantities 14, wherein determination of at least one of the one or more channel state quantities 14 is based, at least in part, on a plurality of interference measurements 12 taken at a plurality of times;
determination of one or more radio resources to be used for transmitting the determined at least one channel state quantity 14; and
determination of one or more reporting time offsets.

In examples, the determining of a separate indication to cause the transmission of at least the at least one channel state quantity 14 determined using, at least, a plurality of interference measurements, is performed by associating one or more identifiers of:
at least one channel state reporting configuration 10 comprising information to enable determination of one or more channel state quantities 14, wherein determination of at least one of the one or more channel state quantities is based, at least in part, on a plurality of interference measurements taken at a plurality of times;
one or more radio resources to be used for transmitting the determined at least one channel state quantity 14; and
one or more reporting time offsets.

In examples, the means comprises
at least one processor; and
at least one memory including computer program code, the at least one memory and computer program code configured to, with the at least one processor, cause the performance of the apparatus.

According to various, but not necessarily all, embodiments there is provided a method comprising:
determining a separate indication to cause transmission of at least one channel state quantity 14 determined using, at least, a plurality of interference measurements 12, wherein the separate indication comprises information to indicate at least one of:
Identifier of at least one channel state reporting configuration comprising information to enable determination of one or more channel state quantities 14, wherein determination of at least one of the one or more channel state quantities 14 is based, at least in part, on a plurality of interference measurements 12 taken at a plurality of times;
determination of one or more radio resources to be used for transmitting the determined at least one channel state quantity 14; and
determination of one or more reporting time offsets.

In examples, the determining of a separate indication to cause the transmission of at least the at least one channel state quantity 14 determined using, at least, a plurality of interference measurements, is performed by associating one or more identifiers of:
at least one channel state reporting configuration 10 comprising information to enable determination of one or more channel state quantities 14, wherein determination of at least one of the one or more channel state quantities is based, at least in part, on a plurality of interference measurements taken at a plurality of times;
one or more radio resources to be used for transmitting the determined at least one channel state quantity 14; and
one or more reporting time offsets.

According to various, but not necessarily all, embodiments there is provided a computer program comprising instructions for causing an apparatus to perform at least:
determining a separate indication to cause transmission of at least one channel state quantity 14 determined using, at least, a plurality of interference measurements 12, wherein the separate indication comprises information to indicate at least one of:
Identifier of at least one channel state reporting configuration comprising information to enable determination of one or more channel state quantities 14, wherein determination of at least one of the one or more channel state quantities 14 is based, at least in part, on a plurality of interference measurements 12 taken at a plurality of times;
determination of one or more radio resources to be used for transmitting the determined at least one channel state quantity 14; and
determination of one or more reporting time offsets.

In examples, the determining of a separate indication to cause the transmission of at least the at least one channel state quantity 14 determined using, at least, a plurality of interference measurements, is performed by associating one or more identifiers of:
at least one channel state reporting configuration 10 comprising information to enable determination of one or more channel state quantities 14, wherein determination of at least one of the one or more channel state quantities is based, at least in part, on a plurality of interference measurements taken at a plurality of times;
one or more radio resources to be used for transmitting the determined at least one channel state quantity 14; and
one or more reporting time offsets.

According to various, but not necessarily all, embodiments there is provided a computer program comprising instructions for causing an apparatus to perform at least a part of one or more methods disclosed herein.

According to various, but not necessarily all, embodiments there is provided an apparatus comprising means for performing at least a part of one or more methods disclosed herein.

According to various, but not necessarily all, embodiments there is provided an apparatus comprising
at least one processor; and
at least one memory including computer program code;
the at least one memory and the computer program code configured to, with the at least one processor, cause the apparatus at least to perform at least a part of one or more methods disclosed herein.

The description of a function and/or action should additionally be considered to also disclose any means suitable for performing that function and/or action.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8A shows another example of the subject matter described herein;
FIG. 8B shows another example of the subject matter described herein;
FIG. 9A shows another example of the subject matter described herein; and
FIG. 9B shows another example of the subject matter described herein.

### DEFINITIONS

Channel state information (CSI) - Information on the state of a communication channel. Can refer to properties of a communication link on a communication channel. Can include information of the channel and/or information of interference. Can describe how a signal propagates between transmitter and receiver. Can comprise one or more CSI quantities. CSI quantity - A quantity determined as at least part of CSI. CSI quantities to be reported can be indicated in a CSI reporting configuration or upon request. Reported CSI quantities may include one or more of: Channel Quality Indicator (CQI), precoding matrix indicator (PMI), CSI reference signal (CSI-RS) resource indicator (CRI), synchronisation signal (SS)/Physical Broadcast Channel (PBCH) Block Resource Indicator (SSBRI), Layer Indicator (LI), rank indicator (RI), L1-RSRP or L1-SINR.

The supported combinations of reported CSI quantities, in NR Rel-15 and Rel-16, include: none, cri-RI-PMI-CQI, cri-RI-i1, cri-RI-i1-CQI, cri-RI-CQI, cri-RSRP, cri-SINR, ssb-Index-RSRP, ssb-Index-SINR and cri-RI-LI-PMI-CQI.

CSI reporting configuration - A configuration to be used in determining CSI. Can comprise information on CSI quantities to be determined and radio resources to be used in determination of the CSI quantities and/or radio resources to be used in reporting determined CSI quantities.

A CSI reporting configuration can be referred to as CSI-ReportConfig. In examples, a Reporting Setting (or configuration) *CSI-ReportConfig* is associated with a single downlink bandwidth part (BWP) (indicated by higher layer parameter *BWP-Id*) given in the associated *CSI-ResourceConfig* for channel measurement and contains the parameter(s) for one CSI reporting band: codebook configuration including codebook subset restriction, time-domain behavior, frequency granularity for CQI and PMI, measurement restriction configurations, and the CSI-related quantities to be reported by the UE such as the layer indicator (LI), L1-RSRP, L1-SINR, CRI, and SSBRI (SSB Resource Indicator).

In examples, the time domain behavior of the *CSI-ReportConfig* is indicated by the higher layer parameter *reportConfigType* and can be set to 'aperiodic', 'semiPersistent', or 'periodic'.

Interference measurement resources (IMR) - Radio resources used or to be used to perform one or more interference measurements. Can be considered as frequency-time domain resources used or to be used to perform one or more interference measurements. Interference measurements can be made in absence of transmissions from a serving access node or base station and/or be based on one or more signals received from a serving access node or base station. Interference measurements can be considered measurements made on a channel in absence of transmissions from a serving access node or base station and/or on one or more signals received from a serving access node or base station.

IMR can be referred to as channel state information - interference measurement (CSI-IM) or NZP-CSI-RS for interference measurement. A UE can be configured with one or more CSI-IM and/or NZP-CSI-RS resource set configuration(s). Each CSI-IM resource set consists of K≥1 CSI-IM resource(s). IMR can be periodic, semi-persistent and aperiodic. Each NZP-CSI-RS resource set consists of K≥1 NZP CSI-RS resource(s) can be periodic, semi-persistent and aperiodic.

Channel measurement resources (CMR) - Radio resources used or to be used to perform channel measurements. Can be considered frequency-time resources used or to be used to perform channel measurements. Can be based on one or more signals received from a serving access node or base station. Channel measurements can be considered measurements made on a channel based on one or more signals received from a serving access node or base station.

Can be referred to as NZP-CSI-RS. A UE can be configured with one or more NZP CSI-RS resource set configuration(s). Each NZP CSI-RS resource set consists of *K*≥1 NZP CSI-RS resource(s). CMR can be periodic, semi-persistent and aperiodic.

Radio resources - Frequency-time domain resources used for transmitting and/or receiving one or more signals and/or information and/or messages.

### DETAILED DESCRIPTION

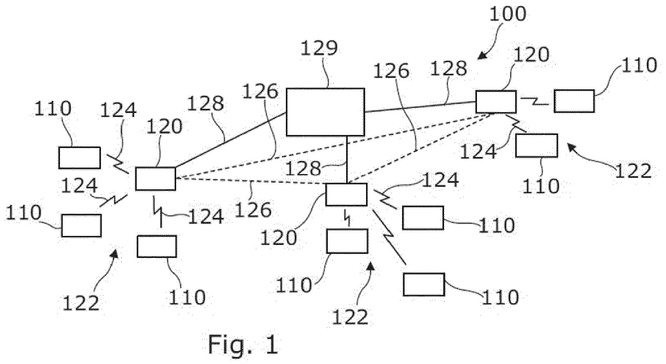

FIG 1 illustrates an example of a network 100 comprising a plurality of network nodes including terminal nodes 110, access nodes 120 and one or more core nodes 129. The terminal nodes 110 and access nodes 120 communicate with each other. The one or more core nodes 129 communicate with the access nodes 120.

The network 100 is in this example a telecommunications network, in which at least some of the terminal nodes 110 and access nodes 120 communicate with each other using transmission/reception of radio waves/signals.

The one or more core nodes 129 may, in some examples, communicate with each other. The one or more access nodes 120 may, in some examples, communicate with each other.

The one or more terminal nodes 110 may, in some examples, communicate with each other.

The network 100 may be a cellular network comprising a plurality of cells 122 each served by an access node 120. In this example, the interface between the terminal nodes 110 and an access node 120 defining a cell 122 is a wireless interface 124.

The access node(s) 120 is a cellular radio transceiver. The terminal nodes 110 are cellular radio transceivers.

In the example illustrated the cellular network 100 is a third generation Partnership Project (3GPP) network in which the terminal nodes 110 are user equipment (UE) and the access nodes 120 are base stations (for example, gNBs).

Functionality of a base station may be distributed between a central unit (CU), for example a gNB-CU, and one or more distributed units (DU), for example gNB-DUs.

In the particular example illustrated the network 100 is an Evolved Universal Terrestrial Radio Access network (E-UTRAN). The E-UTRAN consists of E-UTRAN NodeBs (eNBs), providing the E-UTRA user plane and control plane (for example, RRC) protocol terminations towards the UE. The eNBs 120 are interconnected with each other by means of an X2 interface 126. The eNBs are also connected by means of the S1 interface 128 to the Mobility Management Entity (MME) 129.

In other example the network 100 is a Next Generation (or New Radio, NR) Radio Access network (NG-RAN). The NG-RAN consists of gNodeBs (gNBs), providing the user plane and control plane (for example, RRC) protocol terminations towards the UE. The gNBs are interconnected with each other by means of an X2/Xn interface 126. The gNBs are also connected by means of the N2 interface 128 to the Access and Mobility management Function (AMF).

In examples, the network 100 can comprise a combination of E-UTRAN and NG-RAN.

An access node 120, such as a gNB, can configure a terminal node 110, such as a UE, with one or more channel state reporting configurations, such as one or more CSI reporting configurations, to configure the UE to determine one or more channel state quantities, such as CSI quantities, and to report the determined one or more quantities to the access node 120.

A channel state reporting configuration can be considered a configuration for determination and reporting of one or more channel state quantities. A channel state reporting configuration can be considered a CSI reporting configuration.

A channel state quantity can be considered any quantity providing information of and/or descriptive of and/or indicative of a state of a communication channel and/or communications on a communication channel. A channel state quantity can be considered a CSI quantity.

A channel state reporting configuration can comprise information on the radio resources to be used in determining the one or more channel state quantities and/or information on the radio resources to be used in reporting the one or more determined channel state quantities.

Resources used for determining one or more channel state quantities can be periodic, semi-persistent or aperiodic.

Resources used for reporting one or more determined channel state quantities can be periodic, semi-persistent or aperiodic.

Channel state information can be used to configure and/or adapt and/or change a communication channel and/or use of a communication channel.

Some examples relate to 3GPP network.

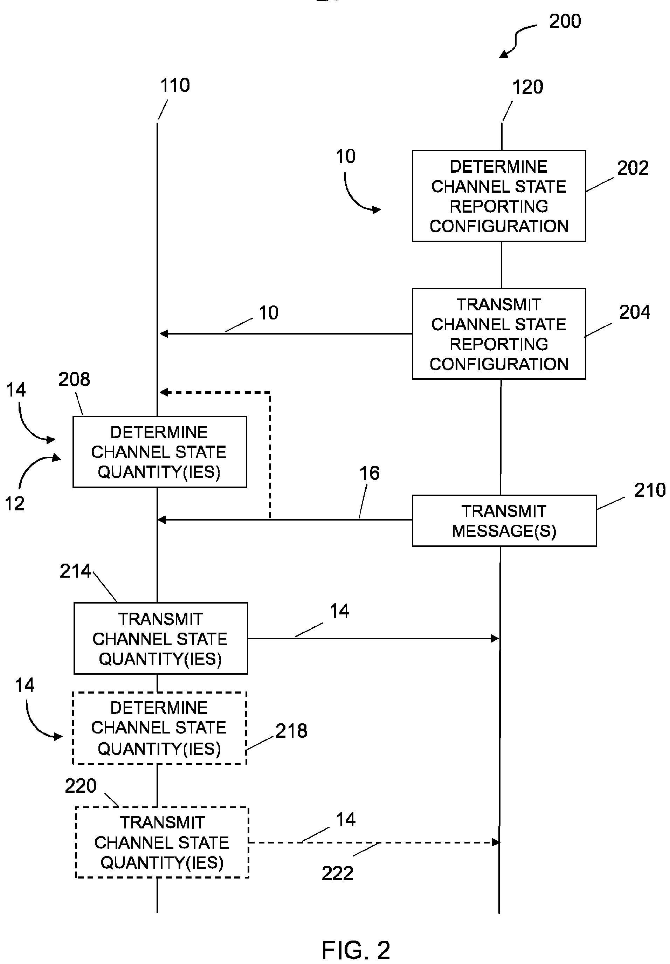

FIG. 2 illustrates an example of a method 200.

In examples, FIG. 2 can be considered to illustrate a plurality of methods. For example, FIG. 2 illustrates one or more actions at a plurality of actors/entities. In examples, FIG. 2 can be considered to illustrate a plurality of methods performed by the individual actors/entities.

One or more of the features discussed in relation to FIG. 2 can be found in one or more of the other figures.

In the example of FIG. 2, a plurality of apparatuses transmit and/or receive one or more signals and/or one or more messages across and/or via and/or using a network. In examples, any suitable form of communication in any suitable network can be used. For example, at least a portion of the network 100 of FIG. 1 can be used.

Accordingly, in examples, the plurality of apparatuses in FIG. 2 form at least a portion of a network 100 as described in relation to FIG. 1.

In the illustrated example, a terminal node 110, such as a UE, and an access node 120, such as a gNB, transmit and/or receive one or more signals and/or one or more messages.

In examples, communications and/or transmissions between elements illustrated in FIG. 2 can proceed via any number of intervening elements, including no intervening elements.

Although two network nodes 110, 120, are illustrated in the example of FIG. 2, in examples any suitable number of network nodes can be included. For example, a plurality of terminal nodes 110 can be included.

At block 202 the method 200 comprises determining a channel state reporting configuration 10, the channel state reporting configuration 10 comprising information to enable determination of one or more channel state quantities 14, wherein determination of at least one of the one or more channel state quantities 14 is based, at least in part, on a plurality of interference measurements 12 taken at a plurality of times.

In the example of FIG. 2, the location of the blocks indicates the entity performing the action(s). For example, in FIG. 2 block 202 is performed at and/or by the access node 120.

In examples, a channel state reporting configuration 10 can comprise/be a CSI reporting configuration.

In examples, a channel state quantity 14 can comprise/be a CSI quantity.

Information comprised in the channel state reporting configuration 10 can be used alone and/or in combination with other information to enable determination of one or more channel state quantities 14.

In some examples, the channel state reporting configuration 10 can be considered to comprise information to, at least in part, configure a terminal node 110 to determine one or more channel state quantities 14.

In some examples, the channel state reporting configuration 10 can be considered to comprise information to, at least in part, control a terminal node 110 to determine one or more channel state quantities 14.

In examples, the channel state reporting configuration 10 comprises information to, at least in part, enable and/or configure and/or control reporting of one or more determined channel state quantities 14, for example by a terminal node 110.

In examples, the channel state reporting configuration 10 comprises information to, at least in part, enable and/or configure and/or control aperiodic reporting of one or more determined channel state quantities 14, for example by a terminal node 110, using physical uplink control channel PUCCH and/or physical uplink shared channel PUSCH.

In some examples, one or more of the one or more channel state quantities 14 are determined based, at least in part, one or more channel measurements and/or one or more interference measurements 12.

In examples, one or more of the channel state quantities 14 can solely characterize interference.

Any suitable interference measurement(s) 12 and/or channel measurement(s) can be used in the determination of the one or more channel state quantities 14.

In examples, interference measurement(s) 12 can comprise/be and/or be considered to be IMR measurement(s).

In examples, channel measurement(s) can comprise/be and/or be considered to be CMR measurement(s).

In some examples, a channel state reporting configuration 10 comprises information that enables determination and/or reporting of one or more channel state quantities 14 in response to receipt of one or more activation and/or trigger messages.

In examples, the channel state reporting configuration 10 is configured to enable and/or configure and/or control a plurality of interference measurements 12. For example, the channel state reporting configuration can be configured to enable a plurality of interference measurements in response to the receipt of an activation and/or trigger message.

Any suitable method for determining a channel state reporting configuration 10 can be used.

As used herein, the term "determining" (and grammatical variants thereof) can include, not least: calculating, computing, processing, deriving, investigating, looking up (for example, looking up in a table, a database or another data structure), ascertaining and the like. Also, "determining" can include receiving (for example, receiving information), accessing (for example, accessing data in a memory) and the like. Also, "determining" can include resolving, selecting, choosing, establishing, and the like.

In examples, when determining and/or configuring a channel state reporting configuration 10, an access node 120 can take into account one or more of: terminal node 110 capabilities, traffic type, load of the network, number of panels at the access node 120 side, transmission scheme MU or SU MIMO and so on.

In examples, the channel state reporting configuration 10 comprises information to enable at least one of:
determination of the radio resources to be used for the plurality of interference measurements;
determination of the one or more channel state quantities to be determined;
determination of a number of interference measurements 12 to be made;
determination of a time interval over which interference measurements 12 are to be made;
determination of at least one reporting time offset; and
determination of at least one radio resource to be used for transmitting the determined at least one channel state quantity 14.

In examples, the channel state reporting configuration 10 can comprise information to enable determination of the radio resources to be used for one or more channel measurements.

In some examples, the channel state reporting configuration 10 can be considered to comprise information to, at least in part, configure and/or control determination of one or more of:
determination of the radio resources to be used for the plurality of interference measurements 12 and/or the radio resources to be used for one or more channel measurements;
determination of the one or more channel state quantities to be determined;
determination of a number of interference measurements 12 to be made;
determination of a time interval over which interference measurements 12 are to be made;
determination of at least one reporting time offset; and
determination of at least one radio resource to be used for transmitting the determined at least one channel state quantity 14.

The channel state reporting configuration 10 can comprise any suitable information to enable determination of one or more of the above listed items.

In examples, the channel state reporting configuration 10 can comprise an identification of information and/or information to enable an identification and/or determination of one or more of the above listed items.

For example, the channel state reporting configuration 10 can comprise an identification of information and/or information to enable an identification and/or determination of radio resources to be used for the plurality of interference measurements 12 and/or one or more channel measurements.

In examples, radio resources to be used for interference measurement(s) 12 can be considered interference measurement resources IMR and/or NZP-CSI-RS for interference measurements.

In examples, radio resources to be used for channel measurements can be considered channel measurement resources CMR.

The channel state reporting configuration 10 can comprise any suitable information to identify and/or to enable an identification and/or determination of the IMR and/or CMR to be used. For example, the channel state reporting configuration 10 can comprise one or more radio resource identifiers.

In some examples, the channel state reporting configuration 10 comprises one or more time offsets for the IMR and/or CMR to be used. In examples, time offsets for the IMR and/or CMR to be used can be considered to form at least part of information to enable determination of radio resources to be used for the plurality of interference measurements 12 and/or channel measurements.

In some examples, the channel state reporting configuration 10 comprises one or more identifiers indicating one or more resource sets to be used as CMR and/or IMR. In examples, time offsets for the resource sets and/or time offsets and periodicity of the resources in a resource set can be considered to form at least part of information to enable determination of radio resources to be used for the plurality of interference measurements 12 and/or channel measurements.

In examples with aperiodic IMR and/or CMR, the channel state reporting configuration 10 can comprise identification of and/or information to enable an identification of one or more time offset for the IMR and/or CMR which can be considered to form at least part of information to enable determination of radio resources to be used for the plurality of interference measurements 12 and/or channel measurements.

In examples with aperiodic IMR and/or CMR the channel state reporting configuration 10 can comprise identification of one or more IMR and/or CMR.

In examples where the channel state reporting configuration 10 comprises identification of and/or information to enable an identification of one or more time offset for the IMR and/or CMR, it can be determined by the terminal node 110 that the same IMR and/or CMR is repeated at different time instances, according to the indicated time offsets and/or time offset indication in the configuration of the resources sets used for IMR and/or CMR.

In some examples, multiple IMR and/or CMR are transmitted by the network node at different time instances according to the indicated time offsets and/or time offset indication in the configuration of the resources sets used for IMR and/or CMR.

In examples, IMR and/or CMR can be periodic, semi-persistent and/or aperiodic.

In examples with periodic or semi-persistent IMR and/or CMR the channel state reporting configuration 10 can comprise identification of and/or information to enable an identification of the IMR and/or CMR periodicity and offset.

In examples, the information to enable a determination of a number of interference measurements 12 to be made and/or to enable a determination of a time interval over which interference measurements 12 are to be made can be used to configure and/or control how many periodic or semi-persistent interference measurements 12 and/or channel measurements are performed for a channel state quantity 14.

For example, the information to enable a determination of a number of interference measurements 12 to be made can comprise information at least indicative of the number of IMR and/or IMR measurements to be used for a channel state quantity 14.

Additionally, or alternatively, the information to enable a determination of a time interval over which interference measurements 12 are to be made can comprise information at least indicative of a time period in which scheduled IMR should be used for a channel state quantity 14.

Accordingly, in examples where IMRs are periodic or semi-persistent a terminal node 110, such as a UE, can compute interference statistics based on multiple periodic and/or semi-persistent IMR measurements 12 for a single channel state reporting configuration 10.

In such examples, the network can configure the terminal node 110 with a time interval over which IMR measurements 12 are to be made or number of semi-persistent and/or periodic IMR measurements for a given channel state quantity or report.

In examples with aperiodic IMR and/or CMR the channel state reporting configuration 10 can comprise an identification of and/or information to enable an identification of the IMR and/or CMR time offsets.

In some examples with aperiodic IMR/CMR the transmission time of the IMR and/or CMR is controlled by aperiodicTriggeringOffset of a ResourceSet.

In such examples, the network may choose to override the configured aperiodicTriggeringOffset of IMR resources in order to enable faster measurements and provide information about the new IMR triggering offsets in the channel state reporting configuration 10. In examples, the indicated time offsets in the channel state reporting configuration 10 may be applied in addition to the configured aperiodicTriggeringOffset of IMR resources or instead of the configured aperiodicTriggeringOffset of IMR resources.

In some examples, no additional offsets are provided, and the terminal node 110 follows the aperiodicTriggeringOffsets as provided in the CSI-RS ResourceSets configurations.

Similarly, a channel state reporting configuration 10 can comprise any suitable information to enable determination of at least one reporting time offset and/or determination of at least one radio resource to be used for transmitting the determined at least one channel state quantity 14.

In examples a reporting time offset can be considered a time offset to be used in transmitting/receiving the determined at least one channel state quantity 14.

In examples, a separate indication is used to indicate time offset to be used in transmitting/receiving the determined at least one channel state quantity 14. The separate indication can contain an identifier pointing to the channel state reporting configuration 10 and an indication for the time offset to be used in transmitting/receiving the determined at least one channel state quantity 14.

For example, a separate indication can be conveyed and/or included in a DCI or MAC CE message.

In some examples, the channel state configuration 10 comprises information to enable determination of at least one reporting time offset and/or determination of at least one radio resource to be used for transmitting the determined at least one channel state quantity on PUCCH and/or PUSCH.

In some examples, radio resource(s) to be used for transmitting the determined at least one channel state quantity 14 can be considered reporting radio resource(s).

In examples, reporting radio resource(s) can be periodic, semi-persistent and/or aperiodic.

The channel state reporting configuration 10 can comprise any suitable information to identify and/or to enable identification of the reporting radio resource(s) to be used. For example, the channel state reporting configuration 10 can comprise one or more radio resource identifiers, such as PUCCH resource IDs.

In examples where the report configuration type is set to aperiodic on PUCCH, the channel state reporting configuration 10 can contain a field indicating one or multiple PUCCH resource IDs indicating PUCCH resources to be used for aperiodic reporting.

Accordingly, in examples, if report configuration type is set to aperiodic on PUCCH, the channel state reporting configuration 10 can contain a field indicating one or multiple PUCCH resource IDs indicating PUCCH resources to be used for aperiodic CSI reporting.

In some examples where the report configuration type is set to aperiodic on PUCCH, PUCCH reporting resources can be determined based on a relationship between a separate indication of one or more PUCCH resources and PUCCH reporting resource(s).

In examples, a separate indication can be considered an indication outside of the channel state reporting configuration 10. For example, an indication of PUCCH resources in downlink control information (DCI) carried over PDCCH.

In examples, the separate indication can be transmitted/received at block 210.

In examples, any suitable relationship between the separate indication of one or more PUCCH resources and PUCCH reporting resources can be used. In examples, the relationship between the separate indication of PUCCH resources and PUCCH reporting resources can be a predefined rule and/or a field in the channel state reporting configuration 10.

Accordingly, in examples, PUCCH resources for aperiodic CSI reporting are derived based on PUCCH resource identification given in DCI and a predefined rule and/or a field in the channel state reporting configuration 10 specifying a relation between PUCCH resources for CSI reporting and PUCCH resource indication in DCI.

In some examples, a separate indication is used to indicate one or more PUCCH resources for CSI reporting from a list/sequence of configured PUCCH resources for CSI reporting in the channel state reporting configuration 10.

In examples, only separate indication is used to indicate one or more PUCCH resources for CSI reporting for a CSI report that was derived according to the channel state reporting configuration 10.

For example, a DCI or MAC CE message can convey the indication without any further information from the CSI reporting configuration.

In examples with periodic or semi-persistent reporting radio resource(s) the channel state reporting configuration 10 can comprise an identification of and/or information to enable an identification of the reporting radio resource(s) periodicity and offset.

In examples with aperiodic reporting radio resource(s) the channel state reporting configuration 10 can comprise an identification of and/or information to enable an identification of the reporting radio resource(s) time offsets.

Any suitable identification of and/or information to enable an identification of the reporting resource(s) time offsets can be used.

In some examples, the channel state reporting configuration 10 can comprise a field indicating one or more reporting time offset. For example, the channel state reporting configuration 10 can comprise a field indicating one or more reporting time offset for reporting on PUCCH.

In some examples, for aperiodic reporting on PUCCH, the indicated one or more reporting time offsets can be considered as one or more time offsets relative to and/or compared to a separate timing indication. For example, the indicated one or more reporting time offsets can be considered as one or more time offsets relative to and/or compared to the indicated PDSCH-to-HARQ_feedback timing indicator in DCI.

In examples, any suitable separate timing indication can be used, such as a timing indicator similar to the indicated PDSCH-to-HARQ feedback timing indicator in DCI.

In examples where there are a plurality of indicated time offsets, the second and later time offsets can be for second and later instances of aperiodic PUCCH.

In some examples, the channel state reporting configuration 10 can comprise a field indicating one or more lists of reporting time offsets and/or possible time offsets.

In examples, the list of time offsets can be considered to contain a relation between a separate time indicator, such as and/or in a similar way as PDSCH-to-HARQ_feedback timing indicator in DCI, and time offset(s) for aperiodic reporting on PUCCH.

In some examples, a list of reporting time offsets can have the same dimensions as physical downlink shared channel time domain resource allocation (PDSCH TDRA) table.

Some examples relate to 3GPP network. The following can be considered to relate to such examples.

A channel state reporting configuration is determined where:
Report configuration type is set to aperiodic on PUCCH,
Reporting time offset may indicate at least one of the following:
   one or multiple reporting time offset,
      In examples, for aperiodic reporting on PUCCH may consider this time as an offset compared to and/or in a similar way as the indicated PDSCH-to-HARQ_feedback timing indicator in DCI. If there are more than one time offset, the second offset could be for the second instance of aperiodic PUCCH.
   one or multiple list of possible reporting time offsets;
      In examples, for aperiodic PUCCH may consider a list of time offsets where the list contains a relation between and/or similar to PDSCH-to-HARQ_feedback timing indicator in DCI and required time offset(s) for aperiodic CSI on PUCCH.
      In examples, for aperiodic PUCCH may consider list of time offsets where the list has the same dimension as PDSCH TDRA table (same as in A-CSI on PUSCH scenario).

If report configuration type is set to aperiodic on PUCCH, the configuration may further contain a field indicating, one or multiple PUCCH resource IDs indicating PUCCH resources to be used for aperiodic CSI reporting.

In examples, the field may only indicate the relation to derive PUCCH resource (same or different) for aperiodic CSI reporting on PUCCH based on the PUCCH resource indication given in DCI.

csi-IM-ResourcesForlnterference and/or NZP-CSI-RS-ResourcesForlnterference in the report configuration indicate a list/sequence of CSI-ResourceConfigld or a single CSI-ResourceConfigld with a field indicating repetition.

CSI Report configuration indicates a list/sequence of aperiodicTriggeringOffset to be applied to a list/sequence of CSI-ResourceConfigld or a single CSI-ResourceConfigld with a field indicating repetition in csi-IM-ResourcesForlnterference and/or NZP-CSI-RS-ResourcesForInterference.

reportQuantity in CSI reporting configuration contains, at least, a CSI reporting quantity that only requires interference measurements to be computed or a CSI reporting quantity computed from a single CMR and multiple IMR.

The number of csi-IM-ResourcesForlnterference and/or NZP-CSI-RS-ResourcesForlnterference measurement to be taken into consideration, with filtering or without filtering when computing a given configured CSI quantity.

A time interval over which csi-IM-ResourcesForlnterference and/or NZP-CSI-RS-ResourcesFORIntereference measurements are taken into consideration, with filtering or without filtering when computing a given configured CSI quantity.

In examples, the channel state reporting configuration can comprise information to configure and/or to enable and/or to control any suitable combination of periodic, semi-persistent and aperiodic IMR and/or CMR with periodic, semi-persistent and aperiodic reporting radio resources at one or more terminal nodes 110, for example.

At block 204, the method 200 comprises transmitting the determined channel state reporting configuration 10.

In examples, block 204 can be considered to comprise transmitting the determined channel reporting configuration 10 to at least one terminal node 110.

As FIG. 2 illustrates one or more actions of transmission, FIG. 2 also illustrates the corresponding receiving feature(s)/action(s) and vice versa.

For example, from the point of view of the terminal node 110, block 204 can be considered to illustrate receiving a channel state reporting configuration 10.

Accordingly, the received channel state reporting configuration 10 at block 204 can be as described in relation to block 202.

Block 204 can therefore be considered to illustrate receiving a channel state reporting configuration 10, the channel state reporting configuration 10 comprising information to enable determination of one or more channel state quantities 14, wherein determination of at least one of the one or more channel state quantities 14 is based, at least in part, on a plurality of interference measurements 12 taken at a plurality of times.

In examples, the channel state reporting configuration 10 can be transmitted in any suitable way.

In some examples, the channel state reporting configuration 10 is transmitted/received as at least part of a radio resource control (RRC) configuration. In examples, a RRC configuration can comprise a plurality of different channel state reporting configurations 10 for use in different circumstances.

In some examples, different channel state reporting configuration can have different activation and/or trigger states.

At block 208, the method 200 comprises determining at least one channel state quantity 14 using, at least, a plurality of interference measurements 12 taken at a plurality of different times, wherein the plurality of interference measurements 12 are enabled, at least in part, by information in the channel state reporting configuration 10.

In some examples, block 208 can be considered to illustrate determining at least one channel state quantity 14 using, at least, a plurality of interference measurements 12 taken at a plurality of different times in accordance with the channel state reporting configuration 10.

In some examples, block 208 can be considered to illustrate determining at least one channel state quantity 14 using, at least, a plurality of interference measurements 12 taken at a plurality of different times as configured and/or controlled and/or enabled by the channel state reporting configuration 10.

In examples, at least one of the at least one channel state quantity 14 solely characterizes interference.

Any suitable method for determining the at least one channel state quantity 14 can be used.

In some examples, the terminal node 110 performs measurements on IMR(s) and/or CMR(s) as configured and/or enabled in the channel state reporting configuration 10 to determine one or more channel state quantities 14.

That is, in examples, the terminal node 110 performs one or more measurements using IMR(s) and/or CMR(s) and associated timing information in the channel state reporting configuration 10.

Accordingly, in examples, the terminal node 110 performs measurements on identified CMR and IMR and computes one or more CSI quantities 14 that are based, at least, on multiple IMR based on measurement of time division multiplexed IMR.

Depending on the configured channel state quantities 14, the terminal node 110 can apply filtering on IMR measurements and/or derive statistics from IMR measurements, for example mean interference, minimum/maximum or one multiple percentiles of the interference distribution, interference standard deviation and/or derive CQI offset, partial or full CQI update.

In examples, the terminal node 110 can also combine a plurality of interference measurements and/or single or multiple channel measurements to derive channel quality statistic(s), for example a signal-to-interference plus noise ratio (SINR) distribution or SINR mean and standard deviation.

At block 210, method 200 comprises transmitting at least one message 16 to cause transmission of at least the at least one channel state quantity 14 determined using, at least, a plurality of interference measurements 12.

In examples, for periodic reporting, the terminal node 14 can start the transmission of channel state quantity(ies) after receiving the channel state reporting configuration 10 without additional trigger and/or activation message(s) for channel state reporting.

In examples, block 210 can be considered to comprise transmitting at least one message 16 to trigger and/or activate transmission and/or reporting of the at least one channel state 14 determined at block 208.

In examples, the at least one message can be and/or can be considered at least one activation or trigger message for semi-persistent reporting configured in the channel state reporting configuration 10 and/or at least one trigger message for aperiodic reporting configured in the channel state reporting configuration 10.

FIG. 2 also illustrates the corresponding receiving action and therefore illustrates receiving at least one message 16.

The at least one message can be any suitable message(s) and/or comprise any suitable information.

In examples, the at least one message 16 can comprise information to activate and/or trigger a subset of the channel state reporting configurations 10 configured at the terminal node 110.

In some examples, the at least one message 16 can be considered to comprise a trigger state corresponding to a trigger state in at least one channel state reporting configuration 10 configured at the terminal node 110.

Any suitable message or messages transmitted using any suitable radio resources can be used.

In examples the at least one message can comprise/be a DCI message.

In examples the at least one message can comprise/be a medium access control control element (MAC CE) message.

In some examples, the at least one message can schedule at least one transmission, such as at least one physical downlink shared channel communication while carrying activation and/or trigger information.

In examples the at least one message 16 comprises information to enable at least one of: determination of one or more radio resources to be used for transmitting the determined at least one channel state quantity 14; and determination of one or more reporting time offsets.

In examples, the at least one message comprises at least one indication of reporting radio resources to be used and/or information relative to which at least one reporting radio resource can be determined.

For example, the at least one message 16 can comprise one or more PUCCH resource IDs which can be used as reporting radio resources and/or to determine reporting radio resources.

In examples, the at least one message 16 comprises information to enable transmission of the determined at least one channel state quantity 14 on PUCCH. In examples, the at least one message 16 can be considered to comprise information to enable transmission of the determined at least one channel state quantity 14 on PUCCH.

In some examples, the at least one message 16 comprises at least one of: one or more reporting time offsets; and one or more timing indicators, relative to which one or more reporting time offsets can be determined.

For example, the at least one message 16 can comprise a PDSCH-to-HARQ_feedback timing indicator and/or one or more similar timing indicators.

Accordingly, in examples, the at least one message 16 can comprise information referenced in the channel state reporting configuration 10 in relation to reporting radio resources and/or reporting time offsets.

In some examples, the at least one message 16 can be transmitted/received prior to block 208. This is illustrated in the example of FIG. 2 by the dashed arrow ending above block 208.

Accordingly, in examples, at least one message 16 can additionally, or alternatively, be and/or be considered at least one activation or trigger message for semi-persistent IMR/CMR configured in the channel state reporting configuration 10 and/or at least one trigger message for aperiodic IMR/CMR configured in the channel state reporting configuration 10.

In examples, the at least one message 16 can be considered a separate indication to cause the transmission of the at least one channel state quantity 14.

Accordingly, in examples, method 200 comprises determining a separate indication to cause transmission of at least one channel state quantity 14 determined using, at least, a plurality of interference measurements 12, wherein the separate indication comprises information to indicate at least one of:
Identifier of at least one channel state reporting configuration comprising information to enable determination of one or more channel state quantities 14, wherein determination of at least one of the one or more channel state quantities 14 is based, at least in part, on a plurality of interference measurements 12 taken at a plurality of times;
determination of one or more radio resources to be used for transmitting the determined at least one channel state quantity 14; and
determination of one or more reporting time offsets.

In examples, the determining of a separate indication to cause the transmission of at least the at least one channel state quantity 14 determined using, at least, a plurality of interference measurements, is performed by associating one or more identifiers of:
at least one channel state reporting configuration 10 comprising information to enable determination of one or more channel state quantities 14, wherein determination of at least one of the one or more channel state quantities is based, at least in part, on a plurality of interference measurements taken at a plurality of times;
one or more radio resources to be used for transmitting the determined at least one channel state quantity 14; and
one or more reporting time offsets.

In examples, the at least one message can activate and/or trigger semi-persistent and/or aperiodic IMR/CMR, and/or can activate and/or trigger semi-persistent and/or aperiodic reporting radio resources as configured in the channel state reporting configuration 10.

In some examples, block 210 can be omitted.

For example, in examples where periodic IMR/CMR resources and periodic reporting radio resources are configured in the channel state reporting configuration 10, block 210 can be omitted.

At block 214, method 200 comprises transmitting the determined at least one channel state quantity 14. In examples, method 200 comprises transmitting the determined at least one channel state quantity 14 to the access node 120.

Consequently, FIG. 2 illustrates a method 200 comprising:
receiving a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
determining at least one channel state quantity using, at least, a plurality of interference measurements taken at a plurality of different times, wherein the plurality of interference measurements are enabled, at least in part, by information in the channel state reporting configuration; and
transmitting the determined at least one channel state quantity.

In some examples that include block 210, from the point of view of the terminal node 110, method 200 comprises receiving at least one message 16; and transmitting the at least one determined channel state quantity, in response to receiving the at least one message 16.

In some examples, from the point of view of the terminal node 110, method 200 comprises receiving at least one message 16; and in response to receiving the at least one message 16, determining a plurality of interference measurement resources and time offsets to receive a plurality of interference measurement resources at a plurality of times, determining the at least on channel state quantity 14 and transmitting the at least one channel state quantity 14.

FIG. 2 also illustrates transmitting at least one message 16 to cause determination of a plurality of interference measurement resources and time offsets to receive a plurality of interference measurement resources at a plurality of times and to cause determination of the at least one channel state quantity 14 and transmission of the at least one channel state quantity 14.

In examples, the at least one message can be transmitted in any suitable way using any suitable radio resources.

In some examples, transmitting the at least one channel state quantity 14 comprises transmitting the at least one channel state quantity 14 in accordance with the channel state reporting configuration 10.

In some examples, transmitting the at least one channel state quantity 14 comprise transmitting the at least one channel state quantity 14 as configured and/or controlled and/or enabled by the channel state reporting configuration 10.

For example, transmitting the at least one channel state quantity 14 can comprise determining and/or using one or more reporting resources and/or reporting time offsets based, at least in part, on information in the channel state reporting configuration 10 and/or at least one message 16.

In examples, transmitting the determined at least one channel state quantity 14 comprises transmitting the determined at least one channel state quantity 14 on a physical uplink control channel, PUCCH, or physical uplink shared channel, PUSCH.

FIG. 2 also illustrates the corresponding receiving features. Consequently, FIG. 2 illustrates a method comprising:
determining a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
transmitting the determined channel state reporting configuration; and
receiving at least one channel state quantity determined using, at least, a plurality of interference measurements enabled by information in the channel state reporting configuration.

Similarly, FIG. 2 illustrates a method wherein the method comprises receiving the at least one channel state quantity 14 comprises receiving the at least one channel state quantity on a physical uplink control channel, PUCCH, or physical uplink shared channel, PUSCH.

In some examples, blocks 208 and 220 can be repeated any suitable number of times as indicated in and/or enabled by and/or configured by and/or controlled by the channel state reporting configuration 10.

This is indicated by the dashed boxes 218 and 220 in the example of FIG. 2.

In examples, blocks 218 and 220 can be at least partially different to blocks 208 and 214 respectively as configured and/or enabled and/or controlled by the channel state reporting configuration 10.

For example, one or more different channel state quantities can be determined and reported at blocks 214 and 220 compared to blocks 208 and 214.

Accordingly, in examples, transmitting the determined at least one channel state quantity 14 comprises transmitting at least a first channel state quantity 14 at a first time and transmitting at least a second channel state quantity at a second, different time, wherein at least one of the at least first and second channel state quantities 14 comprises the at least one channel state quantity determined using, at least, a plurality of interference measurements 12 taken at a plurality of times.

FIG. 2 also illustrates the corresponding receiving action and therefore, in examples, receiving the at least one channel state quantity 14 comprises receiving at least a first channel state quantity 14 at a first time and receiving at least a second channel state quantity at a second, different time, wherein at least one of the at least first and second channel state quantities 14 comprises the at least one channel state quantity 14 determined using, at least, a plurality of interference measurements 12 taken at a plurality of times.

Although FIG. 2 illustrates a method 200 involving a terminal node 110 and an access node 120, FIG. 2 should also be considered to disclose a plurality of methods performed by the terminal node 110 and/or by the access node 120.

Accordingly, FIG. 2 also discloses a method comprising one or more of the actions performed by the terminal node 110, which can be considered an apparatus.

Accordingly, FIG. 1 also discloses a method comprising one or more of the actions performed by the access node 120, which can be considered an apparatus.

In examples, one or more of the blocks and/or actions of FIG. 2 can be omitted. For example, block 201, 218 and/or 220 can be omitted.

Examples of the disclosure are advantageous. For example, examples of the disclosure provide for multi-shot interference measurements from a single channel state reporting configuration.

In examples, the multi-shot interference measurements are enabled with one or more channel measurements.

Accordingly, examples of the disclosure provide for determination of one or more channel state quantities using a plurality of interference measurements from a single channel state reporting configuration.

For example, examples of the disclosure provide for multi-shot interference measurements following a single triggering of a channel state reporting configuration.

Examples of the disclosure also provide for channel state reporting on PUCCH, including aperiodic reporting on PUCCH.

In examples, the indication of a single reporting offset or PUCCH is sufficient to enable at least partial CQI update or CQI offset and interference statistics.

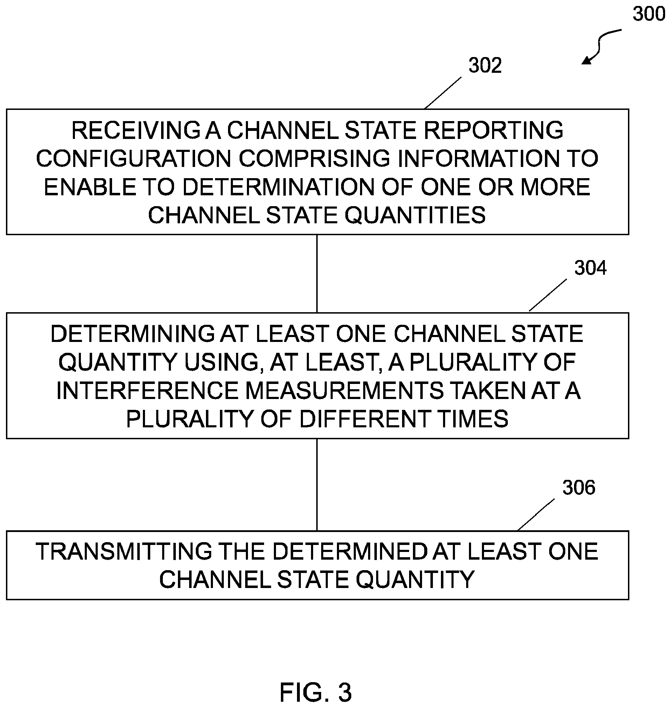

FIG. 3 illustrates an example of a method 300.

In examples, the method 300 can be performed by any suitable apparatus comprising any suitable means for performing the method 300.

In examples, the method 300 is performed by a terminal node 110, such as a UE.

At block 302, the method 300 comprises receiving a channel state reporting configuration 10, the channel state reporting configuration 10 comprising information to enable determination of one or more channel state quantities 14, wherein determination of at least one of the one or more channel state quantities 14 is based, at least in part, on a plurality of interference measurements 12 taken at a plurality of times.

At block 304, the method 300 comprises determining at least one channel state quantity using, at least, a plurality of interference measurements 12 taken at a plurality of different times, wherein the plurality of interference measurements 12 are enabled, at least in part, by information in the channel state reporting configuration 10.

At block 306, the method 300 comprises transmitting the at least one channel state quantity 14.

Consequently, FIG. 3 illustrates a method 300 comprising:
receiving a channel state reporting configuration 10, the channel state reporting configuration 10 comprising information to enable determination of one or more channel state quantities 14, wherein determination of at least one of the one or more channel state quantities is based, at least in part, on a plurality of interference measurements 12 taken at a plurality of times;
determining at least one channel state quantity 14 using, at least, a plurality of interference measurements 12 taken at a plurality of different times, wherein the plurality of interference measurements 12 are enabled, at least in part, by information in the channel state reporting configuration 10; and
transmitting the determined at least one channel state quantity 14.

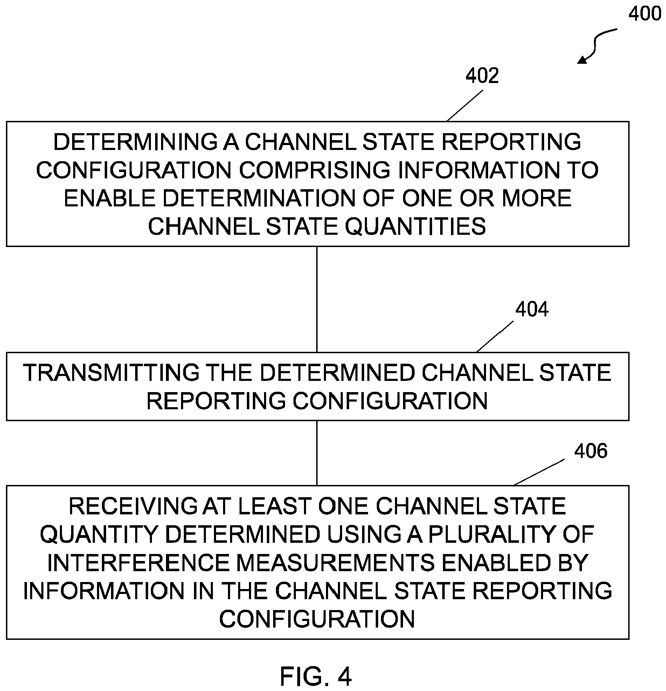

FIG. 4 illustrates an example of a method 400.

In examples, the method 400 can be performed by any suitable apparatus comprising any suitable means for performing the method 400.

In examples, the method 400 is performed by an access node 120, such as a gNB.

At block 402, the method 400 comprises determining a channel state reporting configuration 10, the channel state reporting configuration 10 comprising information to enable determination of one or more channel state quantities 14, wherein determination of at least one of the one or more channel state quantities 14 is based, at least in part, on a plurality of interference measurements 12 taken at a plurality of times.

At block 404, the method 400 comprises transmitting the determined channel state reporting configuration 10.

At block 406, the method 400 comprises receiving at least one channel state quantity 14 determined using, at least, a plurality of interference measurements enabled by information in the channel state reporting configuration 10.

Consequently, FIG. 4 illustrates a method 400 comprising:
determining a channel state reporting configuration 10, the channel state reporting configuration 10 comprising information to enable determination of one or more channel state quantities 14, wherein determination of at least one of the one or more channel state quantities 14 is based, at least in part, on a plurality of interference measurements 12 taken at a plurality of times;
transmitting the determined channel state reporting configuration 10; and
receiving at least one channel state quantity 14 determined using, at least, a plurality of interference measurements 12 enabled by information in the channel state reporting configuration 10.

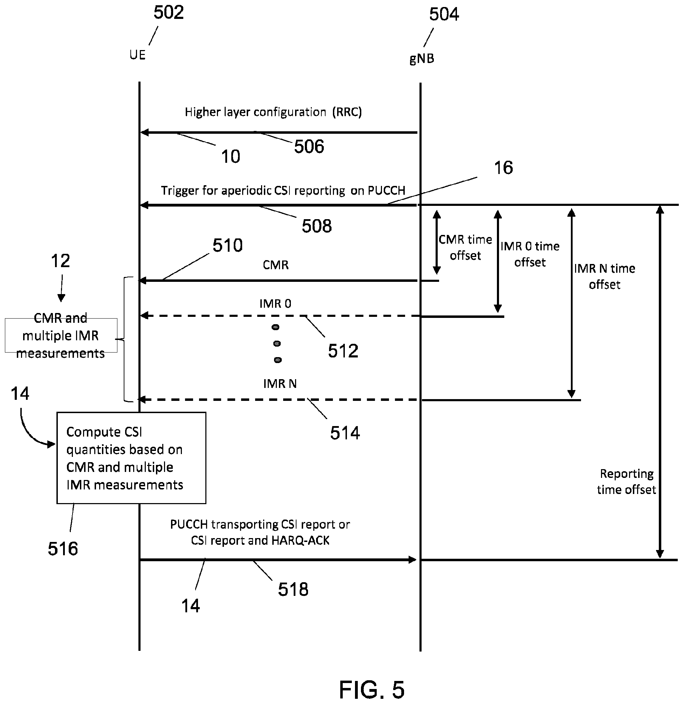

Some examples relate to 3GPP network. FIGs 5, 6, 7, 8A and 8B can be considered to illustrate some such examples.

The example of FIG. 5 is an example of aperiodic IMR/CMR and aperiodic reporting.

In the example of FIG. 5, a UE 502 and a gNB 504 communicate across a network.

At block 506, a higher layer configuration is transmitted from the gNB 504 to the UE 502. In the illustrated example the higher layer configuration is an RRC configuration and comprises a channel state reporting configuration 10.

In the example of FIG. 5, the channel state reporting configuration 10 comprises information to enable aperiodic reporting on PUCCH.

At block 508 at least one message 16 is transmitted from the gNB 504 to the UE 502. The at least one message comprises a trigger for aperiodic CSI reporting on PUCCH.

In response to receiving the at least one message 16, at blocks 512 to 514 the UE 502 performs CMR and multiple IMR measurements using CMR and IMR as configured in the channel state reporting configuration 10.

In FIG. 5, the CMR and different IMR time offsets are determined from the channel state reporting configuration 10 and used relative to receipt of the at least one message 16, as indicated by the labelled double headed arrows.

At block 516, the UE 502 computes and/or determines one or more channel state quantities 14 based on CMR and multiple IMR measurements.

At block 518, the UE 502 transmits the channel state quantity or quantities 14 to the gNB 504.

In FIG. 5 the reporting time offset is determined from the channel state reporting configuration 10 and used relative to receipt of the at least one message 16, as indicated by the labelled double headed arrow.

In the example of FIG.5 the transmission at block 518 is PUCCH transporting CSI report or CSI report and HARQ-ACK.

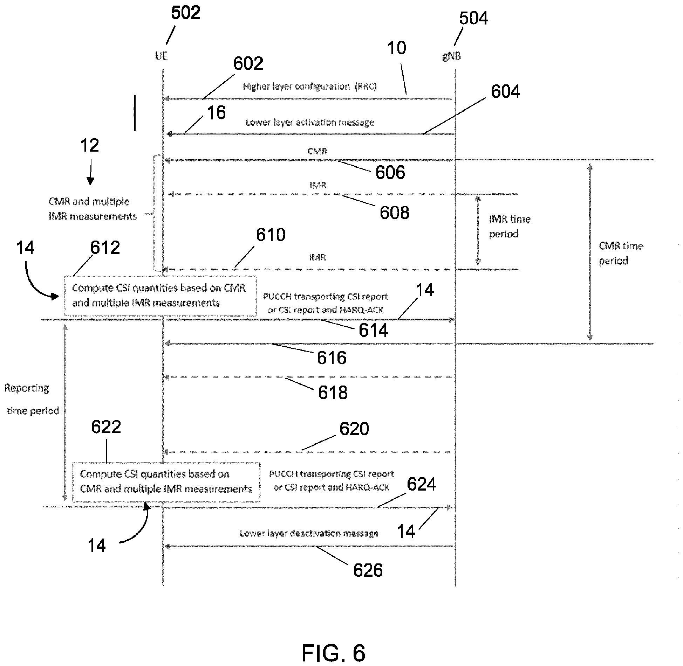

The example of FIG. 6 is similar to the example of FIG. 5. However, the example of FIG. 6 is an example of semi-persistent IMR/CMR and semi-persistent reporting.

Block 602 is similar to block 506 and can be as described in relation to block 506. However, in block 602 the channel state reporting configuration 10 comprises information to enable semi-persistent reporting on PUCCH.

Block 604 is similar to block 508 and can be as described in relation to block 508. However, in block 604 that at least one message 16 is a lower layer activation message configured to activate the semi-persistent resources configured in the channel state reporting configuration 10.

In response to receiving the at least one message 16, at blocks 606 to 610 the UE 502 performs CMR and multiple IMR measurements using CMR and IMR as configured in the channel state reporting configuration 10.

In the example of FIG. 6 the measurements are performed using the configured offset and periodicity for the CMR and IMR resources.

At block 612, the UE 502 computes and/or determines one or more channel state quantities 14 based on CMR and multiple IMR measurements and transmits the channel state quantity or quantities 14 to the gNB at block 614.

Block 614 is similar to block 518 and can be as described in relation to block 518. However, in block 614 the reporting time offset is determined from the configured offset and periodicity for the reporting resources in the channel state reporting configuration 10.

At blocks 616 to 624 the semi-persistent procedure is repeated, and therefore blocks 616 to 624 can be as described in relation to blocks 606 to 614.

At block 626 a lower layer deactivation message is transmitted from the gNB 504 to the UE 502 to end the semi-persistent process.

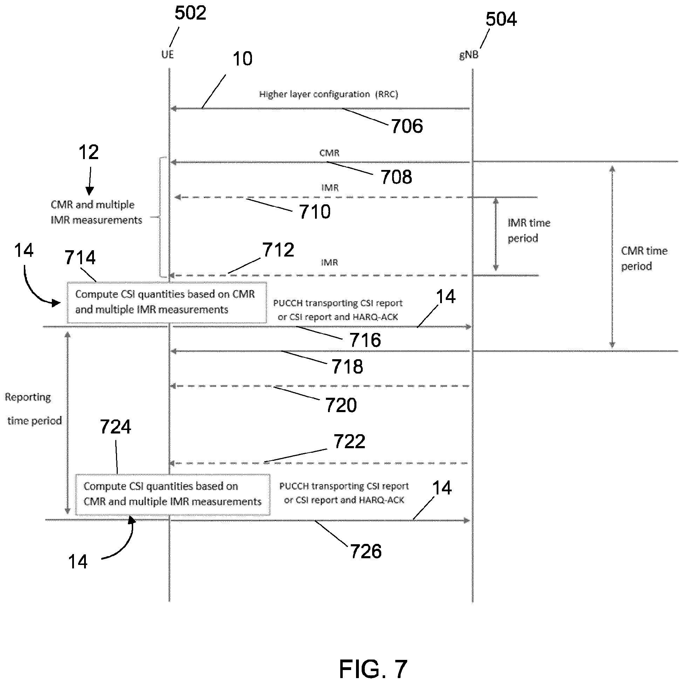

The example of FIG. 7 is similar to the example of FIGs 5 and 6. However, the example of FIG. 7 is an example of periodic IMR/CMR and periodic reporting.

Accordingly, FIG. 7 proceeds in a similar way to FIG. 6, however in FIG. 7 there is no activation message or deactivation message.

Accordingly, blocks 706 to 716 can be as described in relation to blocks 602, 606 to 614.

Similarly, blocks 718 to 726 can be as described in relation to blocks 616 to 624.

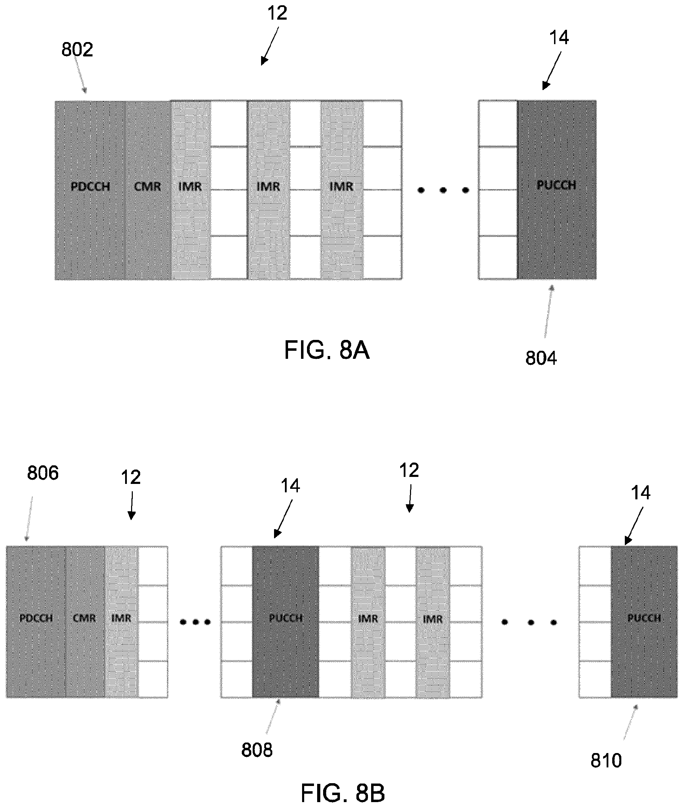

The example in Figure 8A shows PDCCH transmission and corresponding A-CSI triggering by the DCI at block 802.

In examples, this DCI could be scheduling a PDSCH while carrying A-CSI trigger.

In FIG. 8A, the A-CSI trigger is associated with the CSI-reporting configuration 10 where parameters for single CMR and multiple IMR for CSI measurements are indicated. Also, this CSI reporting configuration provides additional information to derive the PUCCH transmission (if it is different from PUCCH indicated in DCI).

The UE considers CMR and multiple IMR to derive accurate interference characteristics and report in the PUCCH showed in Figure 8A at block 804.

Depending on the configured CSI quantities, UE may apply filtering on IMR measurements, derive interference statistics from IMR measurements, for example mean interference, interference standard deviation or derive CQI offset, partial or full CQI update.

The example in Figure 8B shows PDCCH transmission and corresponding A-CSI triggering by the DCI at block 806. As in FIG. 8A, this DCI could be scheduling a PDSCH while carrying A-CSI trigger.

In FIG. 8B, The A-CSI trigger is associated with the CSI-reporting where parameters for single CMR and multiple IMR for CSI measurements are indicated. Also, this CSI reporting configuration provides additional information to derive more than one PUCCH transmission (first PUCCH could also be different from PUCCH indicated in DCI).

To derive A-CSI for the first PUCCH transmission, the UE may be receiving single CMR and IMR and reporting may only consider a single IMR for interference characteristics. However, the UE may receive further IMRs that are associated with the same trigger and use multiple IMRs to derive accurate interference characteristics and report in the second PUCCH transmission as showed in blocks 808 and 810 of FIG 8B.

Examples of the disclosure are advantageous. For example, examples of the disclosure provide for efficient CSM and multiple IMR configuration in a single channel state reporting configuration.

Examples of the disclosure also provide for reporting channel state quantities on PUCCH.

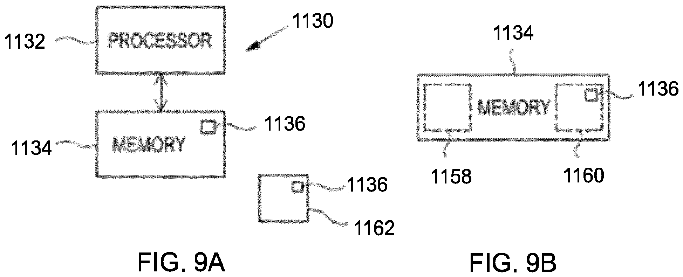

Fig 9A illustrates an example of a controller 1130. The controller 1130 can be used in an apparatus such as a network node 110, 120, such as a mobile terminal or UE and/or a gNB. Implementation of a controller 1130 may be as controller circuitry. The controller 1130 may be implemented in hardware alone, have certain aspects in software including firmware alone or can be a combination of hardware and software (including firmware).

As illustrated in Fig 9A the controller 1130 may be implemented using instructions that enable hardware functionality, for example, by using executable instructions of a computer program 1136 in a general-purpose or special-purpose processor 1132 that may be stored on a computer readable storage medium (disk, memory etc) to be executed by such a processor 1132.

The processor 1132 is configured to read from and write to the memory 1134. The processor 1132 may also comprise an output interface via which data and/or commands are output by the processor 1132 and an input interface via which data and/or commands are input to the processor 1132.

The memory 1134 stores a computer program 1136 comprising computer program instructions (computer program code) that controls the operation of the apparatus when loaded into the processor 1132. The computer program instructions, of the computer program 1136, provide the logic and routines that enables the apparatus to perform the methods illustrated in Figs 2 and/or 3 and/or 4 and/or 5 and/or 6 and/or 7 and/or 8 and/or 9 and/or 10. The processor 1132 by reading the memory 1134 is able to load and execute the computer program 1136.

The apparatus therefore comprises:
at least one processor 1132; and
at least one memory 1134 including computer program code
the at least one memory 1134 and the computer program code configured to, with the at least one processor 1132, cause the apparatus at least to perform:
   receiving a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
   determining at least one channel state quantity using, at least, a plurality of interference measurements taken at a plurality of different times, wherein the plurality of interference measurements are enabled, at least in part, by information in the channel state reporting configuration; and
   transmitting the determined at least one channel state quantity.

The apparatus therefore comprises:
at least one processor 1132; and
at least one memory 1134 including computer program code
the at least one memory 1134 and the computer program code configured to, with the at least one processor 1132, cause the apparatus at least to perform:
   determining a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
   transmitting the determined channel state reporting configuration; and
   receiving at least one channel state quantity determined using, at least, a plurality of interference measurements enabled by information in the channel state reporting configuration.

As illustrated in Fig 9A, the computer program 1136 may arrive at the apparatus via any suitable delivery mechanism 1162. The delivery mechanism 1162 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 1136. The delivery mechanism may be a signal configured to reliably transfer the computer program 1136. The apparatus may propagate or transmit the computer program 1136 as a computer data signal.

Computer program instructions for causing an apparatus to perform at least the following or for performing at least the following:
receiving a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
determining at least one channel state quantity using, at least, a plurality of interference measurements taken at a plurality of different times, wherein the plurality of interference measurements are enabled, at least in part, by information in the channel state reporting configuration; and
transmitting the determined at least one channel state quantity.

Computer program instructions for causing an apparatus to perform at least the following or for performing at least the following:
determining a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
transmitting the determined channel state reporting configuration; and
receiving at least one channel state quantity determined using, at least, a plurality of interference measurements enabled by information in the channel state reporting configuration.

The computer program instructions may be comprised in a computer program, a non-transitory computer readable medium, a computer program product, a machine readable medium. In some but not necessarily all examples, the computer program instructions may be distributed over more than one computer program.

Although the memory 1134 is illustrated as a single component/circuitry it may be implemented as one or more separate components/circuitry some or all of which may be integrated/removable and/or may provide permanent/semi-permanent/ dynamic/cached storage.

In examples the memory 1134 comprises a random access memory 1158 and a read only memory 1160. In examples the computer program 1136 can be stored in the read only memory 1158. See, for example, Fig. 9B

In some examples the memory 1134 can be split into random access memory 1158 and read only memory 1160.

Although the processor 1132 is illustrated as a single component/circuitry it may be implemented as one or more separate components/circuitry some or all of which may be integrated/removable. The processor 1132 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs 2 and/or 3 and/or 4 and/or 5 and/or 6 and/or 7 and/or 8 may represent steps in a method and/or sections of code in the computer program 1136. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

Thus, the apparatus can, in examples, comprise means for:
receiving a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
determining at least one channel state quantity using, at least, a plurality of interference measurements taken at a plurality of different times, wherein the plurality of interference measurements are enabled, at least in part, by information in the channel state reporting configuration; and
transmitting the determined at least one channel state quantity.

Thus, the apparatus can, in examples, comprise means for:
determining a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
transmitting the determined channel state reporting configuration; and
receiving at least one channel state quantity determined using, at least, a plurality of interference measurements enabled by information in the channel state reporting configuration.

In examples, an apparatus can comprise means for performing one or more methods, or at least part of one or more methods, as disclosed herein.

In examples, an apparatus can be configured to perform one or more methods, or at least part of one or more methods, as disclosed herein.

The above described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for performing:
receiving a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
determining at least one channel state quantity using, at least, a plurality of interference measurements taken at a plurality of different times, wherein the plurality of interference measurements are enabled, at least in part, by information in the channel state reporting configuration; and
transmitting the determined at least one channel state quantity.

2. An apparatus as claimed in claim 1, wherein the channel state reporting configuration comprises information to enable at least one of:
determination of the radio resources to be used for the plurality of interference measurements;
determination of a number of interference measurements to be made;
determination of a time interval over which interference measurements are to be made;
determination of the one or more channel state quantities to be determined;
determination of at least one reporting time offset; and
determination of at least one radio resource to be used for transmitting the determined at least one channel state quantity.

3. An apparatus as claimed in claim 1 or 2, wherein the means are configured to perform:
receiving at least one message; and
transmitting the at least one determined channel state quantity, in response to receiving the at least one message.

4. An apparatus as claimed in claim 3, wherein the at least one message comprises information to enable at least one of:
determination of one or more radio resources to be used for transmitting the determined at least one channel state quantity; and
determination of one or more reporting time offsets.

5. An apparatus as claimed in claim 4, wherein the at least one message comprises at least one of:
one or more reporting time offsets; and
one or more timing indicators, relative to which one or more reporting time offsets can be determined.

6. An apparatus as claimed in any preceding claim, wherein transmitting the determined at least one channel state quantity comprises transmitting the determined at least one channel state quantity on a physical uplink control channel, PUCCH, or physical uplink shared channel, PUSCH.

7. An apparatus as claimed in any preceding claim, wherein transmitting the determined at least one channel state quantity comprises transmitting at least a first channel state quantity at a first time and transmitting at least a second channel state quantity at a second, different time and wherein at least one of the at least first and second channel state quantities comprises the at least one channel state quantity determined using, at least, a plurality of interference measurements taken at a plurality of times.

8. A method comprising:
receiving a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
determining at least one channel state quantity using, at least, a plurality of interference measurements taken at a plurality of different times, wherein the plurality of interference measurements are enabled, at least in part, by information in the channel state reporting configuration; and
transmitting the determined at least one channel state quantity.

9. An apparatus comprising means for performing:
determining a channel state reporting configuration, the channel state reporting configuration comprising information to enable determination of one or more channel state quantities, wherein determination of at least one of the one or more channel state quantities is based, at least in part, on a plurality of interference measurements taken at a plurality of times;
transmitting the determined channel state reporting configuration; and
receiving at least one channel state quantity determined using, at least, a plurality of interference measurements enabled by information in the channel state reporting configuration.

10. An apparatus as claimed in claim 9, wherein the channel state reporting configuration comprises information to enable at least one of:
determination of the radio resources to be used for the plurality of interference measurements;
determination of the one or more channel state quantities to be determined;
determination of a number of interference measurements to be made;
determination of a time interval over which interference measurements are to be made;
determination of at least one reporting time offset; and
determination of at least one radio resource to be used for transmitting the determined at least one channel state quantity.

11. An apparatus as claimed in claim 9 or 10, wherein the means are configured to perform:
transmitting at least one message to cause transmission of at least the at least one channel state quantity determined using, at least, a plurality of interference measurements.

12. An apparatus as claimed in claim 11, wherein the at least one message comprises information to enable at least one of:
determination of one or more radio resources to be used for transmitting the determined at least one channel state quantity; and
determination of one or more reporting time offsets.

13. An apparatus as claimed in claim 12, wherein the at least one message comprises at least one of:
one or more reporting time offsets; and
one or more timing indicators, relative to which one or more reporting time offsets can be determined.

14. An apparatus as claimed in any of claims 9 to 13, wherein receiving the at least one channel state quantity comprises receiving the at least one channel state quantity on a physical uplink control channel, PUCCH, or physical uplink shared channel, PUSCH

15. An apparatus as claimed in any of claims 9 to 14, wherein receiving the at least one channel state quantity comprises receiving at least a first channel state quantity at a first time and receiving at least a second channel state quantity at a second, different time and wherein at least one of the at least first and second channel state quantities comprises the at least one channel state quantity determined using, at least, a plurality of interference measurements taken at a plurality of times.
